# EUROPÄISCHE PATENTANMELDUNG

(11) **EP 3 597 684 A1**
(43) Veröffentlichungstag der Anmeldung: **22.01.2020**
(21) Anmeldenummer: 18183837.6
(22) Anmeldetag: 17.07.2018
(51) Int. Cl.: C08G 18/48, C08G 18/76, C08G 18/12, C08G 18/32, C08G 18/42, C09J 175/04

(54) **STRUKTURELLER POLYURETHANKLEBSTOFF MIT GUTER HAFTUNG NACH KURZZEITIGER ERWÄRMUNG**

(71) Anmelder: SIKA TECHNOLOGY AG, 6340 Baar (CH)
(72) Erfinder: Demmig, Martin, 25451 Quickborn (DE); Corsaro, Antonio, 8105 Regensdorf (CH)
(74) Vertreter: Sika Patent Attorneys

(57) **Zusammenfassung**

Die vorliegende Erfindung betrifft einen zweikomponentigen Polyurethanklebstoff bestehend aus einer Polyolkomponente **K1** und einer Polyisocyanatkomponente **K2**; wobei
die Polyolkomponente **K1**
- mindestens ein Diol **A1** mit zwei primären Hydroxylgruppen und einem Molekulargewicht im Bereich von 60 bis 150 g/mol,
- mindestens ein Triol **A2** mit einem mittleren Molekulargewicht im Bereich von 1'000 bis 10'000 g/mol,
- mindestens ein Polyesterpolyol **A3** basierend auf Dimerfettsäuren und/oder Dimerfettalkoholen, insbesondere basierend auf Dimerfettsäuren; und
die Polyisocyanatkomponente **K2**
- mindestens ein Polyisocyanat **B1** und / oder
- mindestens ein Isocyanatgruppen aufweisendes Polyurethanpolymer **B2** umfasst.

## Beschreibung

### Technisches Gebiet

Die Erfindung betrifft das Gebiet der zweikomponentigen Polyurethanklebstoffe, insbesondere der zähelastischen strukturellen Polyurethanklebstoffe.

### Stand der Technik

Zweikomponentige Polyurethanklebstoffe auf Basis von Polyolen und Polyisocyanaten werden bereits seit langem eingesetzt. Zweikomponentige Polyurethanklebstoffe haben den Vorteil, dass sie nach dem Mischen schnell aushärten und deshalb bereits nach kurzer Zeit höhere Kräfte aufnehmen und übertragen können. Für den Einsatz als strukturelle Klebstoffe werden hohe Ansprüche in Bezug auf Festigkeit und Anhaftungskräfte an solche Klebstoffe gestellt, da derartige Klebstoffe Elemente von Last tragenden Strukturen darstellen.

Es besteht insbesondere der Wunsch nach Klebstoffen, die möglichst schnell eine gewisse Haftung aufbauen, also schon belastbar sein, bevor sie vollständig ausgehärtet sind, sodass verklebte Teile schon früh bewegt werden können, oder die Klebeverbindung fixierende Einrichtungen schon früh entfernt werden können. Diese Eigenschaft wird auch als "hohe Frühfestigkeit" bezeichnet.

Insbesondere im Automobilbau können mit kathodischen Tauchlackierungen (KTL) versehene Bauteile verklebt werden, indem der applizierte Klebstoff kurz nach Auftrag für eine kurze Zeit erhitzt wird, insbesondere mittels IR-Strahlung, für ca. 40-60 Sekunden auf eine Temperatur von 150°C. Eine ausreichende Haftung auf solchen Substraten mit erwähnter IR-Vorhärtung ist schwierig zu erreichen. Diese Vorhärtung betrifft typischerweise nur einen Teil (zum Beispiel 10-20 Prozent) der applizierten und gefügten Kleberaupe, dieser Vorgang wird auch "Heften" genannt. Er erhöht die "Handlingsfestigkeit", wodurch die verklebten Bauteile schneller weiter bearbeitet werden können, ohne sich zu lösen. Besonders anspruchsvoll ist es, eine ausreichende Haftung unmittelbar nach der IR-Vorhärtung zu gewährleisten, insbesondere wenn sich der Klebstoff noch im erwärmten Zustand befindet.

Die Klebstoffe sollen weiterhin sowohl bei Umgebungstemperatur als auch in einem durch Wärme beschleunigten Aushärtungsprozess zur Endfestigkeit gehärtet werden können und eine gute Haftung auf metallischen und nichtmetallischen Substraten zeigen. Weiter sollen diese Klebstoffe über eine hohe Festigkeit und eine hohe Dehnbarkeit verfügen.

### Darstellung der Erfindung

Aufgabe der vorliegenden Erfindung ist es daher, einen zweikomponentigen Polyurethanklebstoff zur Verfügung zu stellen, welcher über eine hohe Frühfestigkeit nach kurzeitiger Erhitzung nach Applikation, insbesondere auf KTL-beschichteten Substraten, aufweist. Vorzugsweise soll der erhitzte Klebstoff eine ausreichende Haftung unmittelbar nach der IR-Vorhärtung aufweisen, insbesondere wenn sich der Klebstoff noch im erwärmten Zustand befindet. Weiter sollen diese Klebstoffe über eine hohe Festigkeit und eine hohe Dehnbarkeit verfügen.

Überraschenderweise wird diese Aufgabe mit dem erfindungsgemässen Polyurethanklebstoff gelöst. Es wurde überraschenderweise festgestellt, dass der erfindungsgemässe Polyurethanklebstoff durch die Verwendung eines Polyesterpolyols **A3** als Bestandteil der Polyolkomponente eine erhöhte Frühfestigkeit und eine besonders gute Haftung, insbesondere auf KTL-beschichteten Substraten, aufweist.

Darüber hinaus erfährt die Zusammensetzung unter zusätzlicher Verwendung eines aliphatische Polyol **A4** einen schnelleren Haftungsaufbau sowie eine Verbesserung der Lagerstabilität der Polyolkomponente.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung betrifft einen Polyurethanklebstoff bestehend aus einer Polyolkomponente **K1** und einer Polyisocyanatkomponente **K2;** wobei
die Polyolkomponente **K1**
- mindestens ein Diol **A1** mit zwei primären Hydroxylgruppen und einem Molekulargewicht im Bereich von 60 bis 150 g/mol,
- mindestens ein Triol **A2** mit einem mittleren Molekulargewicht im Bereich von 1'000 bis 10'000 g/mol,
- mindestens ein Polyesterpolyol **A3** basierend auf Dimerfettsäuren und/oder Dimerfettalkoholen, insbesondere basierend auf Dimerfettsäuren; und
die Polyisocyanatkomponente **K2**
- mindestens ein Polyisocyanat **B1** und / oder
- mindestens ein Isocyanatgruppen aufweisendes Polyurethanpolymer **B2** umfasst.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter "Molekulargewicht" versteht man im vorliegenden Dokument die molare Masse (in Gramm pro Mol) eines Moleküls. Als "mittleres Molekulargewicht" wird das zahlenmittlere Molekulargewicht Mₙ einer oligomeren oder polymeren Mischung von Molekülen bezeichnet, welches üblicherweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Der Begriff "Festigkeit" bezeichnet im vorliegenden Dokument die Festigkeit des ausgehärteten Klebstoffs, wobei mit Festigkeit insbesondere die Zugfestigkeit und das Elastizitätsmodul (E-Modul), insbesondere im Dehnungsbereich 0.05 bis 0.25 %, gemeint sind.

Als "Raumtemperatur" wird im vorliegenden Dokument eine Temperatur von 23 °C bezeichnet.

Unter dem Begriff "Fettsäuren" werden im vorliegenden Dokument insbesondere Fettsäuren verstanden, wie sie beschreiben sind im Rompp Chemie Lexikon, 10. Auflage, Thieme Verlag.

Unter dem Begriff "Sojaöl" (auch Sojabohnenöl genannt) wird im vorliegenden Dokument insbesondere Sojaöl verstanden, wie es beschreiben ist im Rompp Chemie Lexikon, 10. Auflage, Thieme Verlag.

Unter dem Begriff "Ricinusöl" (auch Rizinusöl oder Kastoröl genannt) wird im vorliegenden Dokument insbesondere Ricinusöl verstanden, wie es beschreiben ist im Rompp Chemie Lexikon, 10. Auflage, Thieme Verlag.

Unter dem Begriff "Offenzeit", auch "offene Zeit" oder "offene Wartezeit" genannt, wird vorzugsweise im vorliegenden Dokument die offene Zeit verstanden, wie sie beschreiben ist in Römpp Chemie Lexikon, online-Version, Georg Thieme Verlag, abgerufen am 16 Juli 2018.

Unter dem Begriff "kathodische Tauchlackierung (KTL)" werden vorzugsweise im vorliegenden Dokument kationische Elektrotauchlacke verstanden, wie sie beschreiben sind in Römpp Chemie Lexikon, online-Version, Georg Thieme Verlag, abgerufen am 16 Juli 2018.

Die Polyolkomponente **K1** umfasst mindestens ein Diol **A1** mit zwei primären Hydroxylgruppen und einem Molekulargewicht im Bereich von 60 bis 150 g/mol. Diole mit einem Molekulargewicht von mehr als 150 g/mol führen im ausgehärteten Zustand zu eine deutlich geringeren Festigkeiten.

Als Diol **A1** geeignet sind insbesondere 1,2-Ethandiol, 1,3-Propandiol, 1,4-Butandiol, 1,5-Pentandiol, 1,6-Hexandiol, 1,3-Cyclohexandimethanol, 1,4-Cyclohexandimethanol und Diethylenglykol. Diese Diole weisen primäre, sterisch kaum gehinderte Hydroxylgruppen auf, welche mit Isocyanatgruppen besonders reaktiv sind.

Besonders bevorzugt handelt es sich beim Diol **A1** um ein lineares Diol, insbesondere ausgewählt aus der Gruppe bestehend aus 1,3-Propandiol, 1,4-Butandiol und 1,5-Pentandiol. Diese Diole sind besonders gut handhabbar, da sie kaum hydrophil und bei Raumtemperatur flüssig sind, und sie bilden bei der Aushärtung des Klebstoffes an Urethanbindungen reiche Kettensegmente aus, was hohe Festigkeiten bei guter Dehnbarkeit über einen weiten Temperaturbereich begünstigt. Davon besonders bevorzugt sind 1,4-Butandiol und 1,5-Pentandiol, am meisten bevorzugt ist 1,4-Butandiol.

Als Triol **A2** geeignet ist insbesondere ein Polyoxyalkylentriol, auch Polyethertriol genannt. Dies sind Polymerisationsprodukte von Ethylenoxid, 1,2-Propylenoxid, 1,2- oder 2,3-Butylenoxid oder Mischungen davon. Typischerweise sind sie polymerisiert mit Hilfe eines Startermoleküls mit drei aktiven Wasserstoffatomen wie beispielsweise Glycerin, 1,1,1-Trimethylolethan, 1,1,1-Trimethylolpropan oder Mischungen davon.

Bevorzugt als Triol **A2** sind Polyoxypropylentriole, Polyoxyethylentriole und Polyoxypropylen-Polyoxyethylen-Triole.

Besonders bevorzugt weist das Triol **A2** primäre Hydroxylgruppen, am meisten bevorzugt ausschliesslich primäre Hydroxylgruppen, auf.

Besonders bevorzugt als Triol **A2** sind sogenannte "EO-endcapped" (ethylene oxide-endcapped) Polyoxypropylentriole. Dies sind spezielle Polyoxypropylenpolyoxyethylentriole, die beispielsweise dadurch erhalten werden, dass reine Polyoxypropylentriole nach Abschluss der Polypropoxylierung mit Ethylenoxid weiter alkoxyliert werden und dadurch primäre Hydroxylgruppen aufweisen. Gegenüber reinen Polyoxyethylentriolen weisen sie den Vorteil auf, dass sie weniger hydrophil und bei Raumtemperatur flüssig sind.

Das Triol **A2** weist bevorzugt eine mittlere OH-Funktionalität im Bereich von 2.2 bis 3 auf. Mit solchen Triolen **A2** werden Klebstoffe mit guten mechanischen Eigenschaften erhalten.

Das Triol **A2** weist bevorzugt ein mittleres Molekulargewicht im Bereich von 3'000 bis 8'000 g/mol, besonders bevorzugt von 4'000 bis 6'000 g/mol, am meisten bevorzugt von 4'500 bis 5'000 g/mol, auf. Ein solches Triol weist eine gute Kombination aus hoher Funktionalität und Kettenlänge auf, sodass damit ein Klebstoff mit guten mechanischen Eigenschaften erhalten wird.

Die Polyolkomponente **K1** umfasst weiterhin mindestens ein Polyesterpolyol **A3** basierend auf Dimerfettsäuren und/oder Dimerfettalkoholen.

Vorzugsweise handelt es sich bei dem mindestens einen Polyesterpolyol **A3** um ein Polyesterpolyol **A3** basierend auf Dimerfettsäuren.

Vorzugsweise handelt es sich bei dem mindestens einen Polyesterpolyol **A3** um ein Polyesterpolyol **A3** basierend auf Dimerfettsäuren aus C10 - C30- Fettsäuren, bevorzugter C12 - C25- Fettsäuren, insbesondere C14 - C22-Fettsäuren.

Vorzugsweise handelt es sich bei dem mindestens einen Polyesterpolyol **A3** um ein Polyesterpolyol **A3** basierend auf Dimerfettsäuren, welche ausgewählt sind aus der Liste bestehend aus Dimerisierungsprodukten von Fettsäuren ausgewählt aus der Liste bestehend aus Ölsäure, Linolsäure, Linolensäure, Palmitoleinsäure und Elaidinsäure.

Die Dimerisierungsprodukte der ungesättigten Fettsäuregemische, die bei der Hydrolyse von natürlichen Fetten und Ölen erhalten werden, z. B. Sonnenblumenöl, Sojaöl, Olivenöl, Rapsöl, Baumwollsamenöl und Tallöl, können ebenfalls verwendet werden. Zusätzlich zu den Dimerfettsäuren führt die Dimerisierung üblicherweise dazu, dass variierende Mengen an oligomeren Fettsäuren (sogenannte "Trimere") und Reste von monomeren Fettsäuren (sogenannte "Monomere") oder Ester davon vorliegen. Geeignete Dimerfettsäuren haben einen Dimersäuregehalt von mehr als 60%, vorzugsweise mehr als 75%, mehr bevorzugt im Bereich von 90 bis 99,5%, insbesondere 95 bis 99% und insbesondere 97 bis 99%.

Im Handel erhältliche geeignete Polyesterpolyole **A3** umfassen amorphe Materialien, vorzugsweise bei Raumtemperatur flüssige Materialien, erhältliche Materialien sind beispielsweise Dynacoll® 7360, 7380, 7330, 7231, 7250 (Evonik), Rucoflex® S-105-10 (Bayer), Stepanpol® PN110 (Stepan), Priplast® 1838, 3196 (Croda).

Vorzugsweise weist das Polyesterpolyol **A3** ein mittleres Molekulargewicht im Bereich von 500 bis 10000 g/mol, 500 bis 7000 g/mol, 500 bis 5000 g/mol, insbesondere 1000 bis 3000 g/mol, auf.

Vorzugsweise handelt es sich bei dem mindestens einen Polyesterpolyol **A3** um ein Diol.

Solche Polyesterpolyole **A3** sind dahingehend von Vorteil, dass der Klebstoff dadurch nach einer Vorhärtung, insbesondere einer IR-Vorhärtung bei 150 °C für 40 Sekunden, auf KTL-beschichteten Substraten eine bessere Haftung aufweist. Dies insbesondere in dem Fall, wenn die Zugscherfestigkeit unmittelbar nach der Vorhärtung bestimmt wird, wenn sich der Klebstoff noch im erwärmten Zustand befindet. Weiter führen solche Polyesterpolyole **A3** zu einer Verbesserung der Topfzeit.

Vorzugsweise umfasst die Polyolkomponente **K1** weiterhin mindestens ein aliphatisches Polyol **A4,** welches ein Hydroxylierungsprodukt von einem Triglycerid basierend auf Fettsäuren ist.

Vorzugsweise handelt es sich bei den Fettsäuren um Hydroxyfunktionelle Fettsäuren. Die bevorzugten Hydroxylgruppen sind aliphatisch gebundene primäre und / oder sekundäre Hydroxylgruppen, insbesondere aliphatisch gebundene sekundäre Hydroxylgruppen.

Vorzugsweise handelt es sich bei den Fettsäuren um Fettsäuren, welche einzeln zwischen 10 und 30 Kohlenstoffatomen, insbesondere zwischen 16 und 20 Kohlenstoffatomen, enthalten und frei von aromatischen Gruppen sind.

Bevorzugte aliphatische Polyole **A4** weisen eine mittlere OH-Funktionalität im Bereich von 2 bis 8, bevorzugter von 2 bis 4 und am bevorzugtesten von 2 bis 3 auf.

Die aliphatischen Polyole **A4** sind vorzugsweise bei 25ºC flüssig und haben Hydroxylwerte zwischen 20 und 300 mg KOH / g (entsprechend einem Bereich von Hydroxyläquivalentgewichten von 2800 bis 190). Ein noch mehr bevorzugter Bereich von Hydroxylwerten ist von 50 bis 200 mg KOH / g

(entsprechend einem Bereich des Hydroxyläquivalentgewichts von 1100 bis 280).

Vorzugsweise handelt es sich bei dem aliphatischen Polyol **A4** um ein Hydroxylierungsprodukt basierend auf Sojaöl, auch Sojabohnenöl genannt, oder um ein Hydroxylierungsprodukt basierend auf Ricinusöl, besonders bevorzugt um ein Hydroxylierungsprodukt basierend auf Ricinusöl.

Besonders bevorzugt handelt es sich bei dem aliphatischen Polyol **A4** um ein Hydroxylierungsprodukt von Sojaöl, auch Sojabohnenöl genannt, oder um ein Hydroxylierungsprodukt von Ricinusöl, am meisten bevorzugt um ein Hydroxylierungsprodukt von Ricinusöl.

Solche aliphatischen Polyole **A4** sind dahingehend von Vorteil, dass der Klebstoff dadurch einen schnelleren Haftungsaufbau, insbesondere nach 1 h, respektive nach 24 h, bei Raumtemperatur aufweist.

Weiter führt die Anwesenheit von dem aliphatischen Polyol **A4** zu einer Verbesserung der Topfzeit sowie zu höheren Werten des E-Modul, der Zugfestigkeit und der Bruchdehnung. Weiter wurde überraschenderweise gefunden, dass die Zugabe von aliphatischem Polyol **A4** zu einer Verbesserung der Lagerstabilität zur Komponente **K1** führt.

Vorzugsweise sind das Diol **A1,** das Triol **A2,** das Polyesterpolyol **A3** und gegebenfalls das aliphatische Polyol **A4** im Klebstoff in einer solchen Menge vorhanden, dass das Gewichtsverhältnis (**A1+A2**)/(**A3+A4**) im Bereich von 0.3 bis 1.3, 0.35 bis 1.1, 0.4 bis 0.9, insbesondere 0.5 bis 0.8, liegt.

Beträgt das Gewichtsverhältnis weniger als 0.3 ist dies dahingehend von Nachteil, dass dies zu tieferen Werten für die Festigkeit und das E-modul führt. Beträgt das Gewichtsverhältnis mehr als 1.3 ist dies dahingehend von Nachteil, dass dies zu tieferen Werten für die Haftung nach einer Vorhärtung führt.

Weiter ist es von Vorteil, wenn das Diol **A1** und das Triol **A2** im Klebstoff in einer solchen Menge vorhanden sind, dass das Gewichtsverhältnis

**A1/A2** im Bereich von 0.1 bis 0.5, 0.15 bis 0.4, 0.2 bis 0.4, insbesondere 0.25 bis 0.35, liegt.

Ein solches Gewichtsverhältnis ist dahingehend von Vorteil, dass dadurch für einen strukturellen Klebstoff besonders vorteilhafte Werte für die Festigkeit und das E-modul erhalten werden.

Es kann weiter vorteilhaft sein, wenn das Polyesterpolyol **A3** und das gegebenfalls vorhandene aliphatische Polyol **A4** im Klebstoff in einer solchen Menge vorhanden sind, dass das Gewichtsverhältnis **A3/A4** im Bereich von 1.0 bis 3.0, 1.2 bis 2.5, 1.3 bis 2.0, 1.3 bis 1.8, insbesondere 1.35 bis 1.6, liegt.

Beträgt das Gewichtsverhältnis weniger als 1.0 ist dies dahingehend von Nachteil, dass dies zu tieferen Werten für die Haftung nach einer Vorhärtung führt. Beträgt das Gewichtsverhältnis mehr als 3.0 ist dies dahingehend von Nachteil, dass dies zu einer geringeren Lagerstabilität und einer verminderten Wärmestandfestigkeit führt.

Die Polyisocyanatkomponente **K2** umfasst mindestens ein Polyisocyanat **B1** und/oder mindestens ein Isocyanatgruppen aufweisendes Polyurethanpolymer **B2.** Vorzugsweise umfasst die Polyisocyanatkomponente **K2** mindestens ein Isocyanatgruppen aufweisendes Polyurethanpolymer **B2.**

Als Polyisocyanat **B1** geeignet sind insbesondere monomere Di- oder Triisocyanate, sowie Oligomere, Polymere und Derivate von monomeren Di- oder Triisocyanaten, sowie beliebige Mischungen davon.

Geeignete aromatische monomere Di- oder Triisocyanate sind insbesondere 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)benzol, Tris-(4-isocyanatophenyl)methan und Tris-(4-isocyanatophenyl)thiophosphat.

Geeignete aliphatische monomere Di- oder Triisocyanate sind insbesondere 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methyl-ethyl)naphthalin, Dimer- und Trimerfettsäureisocyanate wie 3,6-Bis-(9-isocya-natononyl)-4,5-di-(1-heptenyl)cyclohexen (Dimeryldiisocyanat) und α,α,α',α',α",α"-Hexamethyl-1,3,5-mesitylentriisocyanat.

Geeignete Oligomere, Polymere und Derivate der genannten monomeren Di- und Triisocyanate sind insbesondere abgeleitet von MDI, TDI, HDI und IPDI. Davon insbesondere geeignet sind kommerziell erhältliche Typen, insbesondere HDI-Biurete wie Desmodur® N 100 und N 3200 (von Bayer), Tolonate® HDB und HDB-LV (von Rhodia) und Duranate® 24A-100 (von Asahi Kasei); HDI-Isocyanurate, wie Desmodur® N 3300, N 3600 und N 3790 BA (alle von Bayer), Tolonate® HDT, HDT-LV und HDT-LV2 (von Rhodia), Duranate® TPA-100 und THA-100 (von Asahi Kasei) und Coronate® HX (von Nippon Polyurethane); HDI-Uretdione wie Desmodur® N 3400 (von Bayer); HDI-Iminooxadiazindione wie Desmodur® XP 2410 (von Bayer); HDI-Allophanate wie Desmodur® VP LS 2102 (von Bayer); IPDI-Isocyanurate, wie beispielsweise in Lösung als Desmodur® Z 4470 (von Bayer) oder in fester Form als Vestanat® T1890/ 100 (von Degussa); TDI-Oligomere wie Desmodur® IL (von Bayer); sowie gemischte Isocyanurate auf Basis TDI/HDI, zum Beispiel als Desmodur® HL (von Bayer). Weiterhin insbesondere geeeignet sind bei Raumtemperatur flüssige Formen von MDI (sogenanntes "modifiziertes MDI"), welche Gemische von MDI mit MDI-Derivaten, wie insbesondere MDI-Carbodiimiden oder MDI-Uretoniminen oder MDI-Urethanen darstellen, bekannt unter Handelsnamen wie Desmodur® CD, Desmodur® PF, Desmodur® PC (alle von Bayer) oder Isonate® M 143 (von Dow), sowie Gemische aus MDI und MDI-Homologen (polymeres MDI oder PMDI), erhältlich unter Handelsnamen wie Desmodur® VL, Desmodur® VL50, Desmodur® VL R10, Desmodur® VL R20, Desmodur® VH 20 N und Desmodur® VKS 20F (alle von Bayer), Isonate® M 309, Voranate® M 229 und Voranate® M 580 (alle von Dow) oder Lupranat® M 10 R (von BASF). Die vorgenannten oligomeren Polyisocyanate stellen in der Praxis üblicherweise Gemische von Substanzen mit unterschiedlichen Oligomerisierungsgraden und/oder chemischen Strukturen dar. Vorzugsweise weisen sie eine mittlere NCO-Funktionalität von 2.1 bis 4.0 auf.

Bevorzugt als Polyisocyanat **B1** sind bei Raumtemperatur flüssige Formen von MDI. Dies sind insbesondere sogenannt polymeres MDI sowie MDI mit Anteilen von Oligomeren oder Derivaten davon. Der Gehalt an MDI (=4,4'-, 2,4'- oder 2,2'-Diphenylmethandiisocyanat und beliebige Gemische dieser Isomeren) solcher flüssiger Formen von MDI beträgt insbesondere 50 bis 95 Gewichts-%, insbesondere 60 bis 90 Gewichts-%.

Besonders bevorzugt als Polyisocyanat **B1** sind polymeres MDI und insbesondere bei Raumtemperatur flüssige MDI-Typen, welche Anteile von MDI-Carbodiimiden oder deren Addukten enthalten.

Mit diesen Polyisocyanaten **B1** werden besonders gute Verarbeitungseigenschaften und besonders hohe Festigkeiten erhalten.

Die Polyisocyanatkomponente **K2** umfasst vorzugsweise mindestens ein Isocyanatgruppen aufweisendes Polyurethanpolymer **B2.**

Das Polyurethanpolymer **B2** weist bevorzugt 50 bis 95 Massenprozente, insbesondere 70 bis 90 Massenprozente, Polyoxyalkyleneinheiten, besonders bevorzugt Polyoxyethylen- und/oder Polyoxypropyleneinheiten, insbesondere Polyoxypropyleneinheiten, auf. Ein solches Polyurethanpolymer weist eine tiefe Viskosität auf und ermöglicht eine gute Dehnbarkeiten.

Das Polyurethanpolymer **B2** weist bevorzugt ein mittleres Molekulargewicht im Bereich von 1'000 bis 20'000 g/mol, besonders bevorzugt 2'000 bis 10'000 g/mol, auf.

Das Polyurethanpolymer **B2** weist bevorzugt eine mittlere NCO-Funktionalität im Bereich von 1.7 bis 3, insbesondere von 1.8 bis 2.5, auf. Ein solches Polyurethanpolymer ermöglicht gute Verarbeitungseigenschaften und gute mechanische Eigenschaften im ausgehärteten Zustand.

Besonders bevorzugt weist das Polyurethanpolymer **B2** eine mittlere NCO-Funktionalität im Bereich von 2.05 bis 2.5 auf. Ein solches Polyurethanpolymer ermöglicht besonders gute Dehnbarkeiten bei hoher Festigkeit.

Das Polyurethanpolymer **B2** weist bevorzugt einen Gehalt an freien Isocyanatgruppen von 1 bis 10 Gewichts-%, besonders bevorzugt von 1 bis 5 Gewichts-%, auf.

Ein geeignetes Isocyanatgruppen aufweisendes Polyurethanpolymer **B2** ist erhältlich aus der Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO / OH-Verhältnis" wird das Verhältnis der Anzahl der eingesetzten Isocyanatgruppen zu der Anzahl der eingesetzten Hydroxylgruppen verstanden.

Als Polyol zur Herstellung eines Polyurethanpolymers **B2** sind insbesondere die folgenden handelsüblichen Polyole oder Mischungen davon geeignet:
- Polyoxyalkylenpolyole, auch Polyetherpolyole oder Oligoetherole genannt, welche Polymerisationsprodukte von Ethylenoxid, 1,2-Propylenoxid, 1,2- oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyalkylendiole oder Polyoxyalkylentriole, insbesondere Polyoxyethylen- und Polyoxypropylendi- und -triole. Ganz besonders geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.
   Speziell geeignet sind sogenannte Ethylenoxid-terminierte ("EO-endcapped", ethylene oxide-endcapped) Polyoxypropylenpolyole.

- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.
   Als Polyesterpolyole insbesondere geeignet sind solche, welche hergestellt sind aus zwei- bis dreiwertigen, insbesondere zweiwertigen, Alkoholen, wie beispielsweise Ethylenglykol, Diethylenglykol, Propylenglykol, Dipropylenglykol, Neopentylglykol, 1,4-Butandiol, 1,5-Pentandiol, 3-Methyl-1,5-hexandiol, 1,6-Hexandiol, 1,8-Octandiol, 1,10-Decandiol, 1,12-Dodecandiol, 1,12-Hydroxystearylalkohol, 1,4-Cyclohexandimethanol, Dimerfettsäurediol (Dimerdiol), Hydroxypivalinsäureneopentylglykolester, Glycerin, 1,1,1-Trimethylolpropan oder Mischungen der vorgenannten Alkohole, mit organischen Di- oder Tricarbonsäuren, insbesondere Dicarbonsäuren, oder deren Anhydride oder Ester, wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid, oder Mischungen der vorgenannten Säuren, sowie Polyesterpolyole aus Lactonen wie beispielsweise aus ε-Caprolacton und Startern wie den vorgenannten zwei- oder dreiwertigen Alkoholen. Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle, beispielsweise natürliche Fette und Öle, inbesondere Ricinusöl; oder durch chemische Modifizierung von natürlichen Fetten und Ölen gewonnene - sogenannte oleochemische - Polyole, beispielsweise die durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole; oder aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivaten davon erhaltene Polyole. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.
- Polykohlenwasserstoffpolyole, auch Oligohydrocarbonole genannt, wie beispielsweise polyhydroxyfunktionelle Polyolefine, Polyisobutylene, Polyisoprene; polyhydroxyfunktionelle Ethylen-Propylen-, Ethylen-Butylen- oder Ethylen-Propylen-Dien-Copolymere, wie sie beispielsweise von der Firma Kraton Polymers hergestellt werden; polyhydroxyfunktionelle Polymere von Dienen, insbesondere von 1,3-Butadien, welche insbesondere auch aus anionischer Polymerisation hergestellt sein können; polyhydroxyfunktionelle Copolymere aus Dienen wie 1,3-Butadien oder Diengemischen und Vinylmonomeren wie Styrol, Acrylonitril, Vinylchlorid, Vinylacetat, Vinylalkohol, Isobutylen und Isopren, beispielsweise polyhydroxyfunktionelle Acrylonitril/ Butadien-Copolymere, wie sie beispielsweise aus Epoxiden oder Aminoalkoholen und carboxylterminierten Acrylonitril/Butadien-Copolymeren (beispielsweise kommerziell erhältlich unter dem Namen Hypro® (früher Hycar®) CTBN und CTBNX und ETBN von Nanoresins AG, Deutschland, bzw. Emerald Performance Materials LLC) hergestellt werden können; sowie hydrierte polyhydroxyfunktionelle Polymere oder Copolymere von Dienen.

Als Polyol zur Herstellung eines Polyurethanpolymers **B2** bevorzugt sind Polyoxyalkylenpolyole, Polyesterpolyole, Polycarbonatpolyole und Polyacrylatpolyole. Besonders bevorzugt sind Polyoxyalkylenpolyole, insbesondere Polyoxypropylenpolyole und Polyoxyethylen-Polyoxypropylen-Mischpolyole.

Das Polyol zur Herstellung eines Polyurethanpolymers **B2** weist bevorzugt ein mittleres Molekulargewicht im Bereich von 500 bis 20'000 g/mol, insbesondere 1'000 bis 8'000 g/mol, auf.

Das Polyol zur Herstellung eines Polyurethanpolymers **B2** ist bevorzugt ein Diol oder eine Mischung aus mindestens einem Diol und mindestens einem Triol, insbesondere eine Mischung aus mindestens einem Diol und mindestens einem Triol.

Als Polyisocyanat zur Herstellung eines Polyurethanpolymers **B2** sind insbesondere die folgenden handelsüblichen Polyisocyanate oder Mischungen davon geeignet:
2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), 1,3,5-Tris-(isocyanatomethyl)benzol, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI) und m- und p-Tetramethyl-1,3- und -1,4-xylylendiisocyanat (mund p-TMXDI). Bevorzugt sind MDI, TDI, IPDI und HDI. Besonders bevorzugt ist MDI.

Am meisten bevorzugt ist 4,4'-Diphenylmethandiisocyanat.

Vorzugsweise ist das Isocyanatgruppen aufweisende Polyurethanpolymer **B2** erhältlich aus der Umsetzung von 4,4'-Diphenylmethandiisocyanat mit mindestens einem Polyol. Damit werden bei der Aushärtung des Klebstoffes besonders wirksame Hartsegmente und somit besonders hohe Festigkeiten erhalten.

Vorzugsweise handelt es sich beim Polyisocyanat **B1** und dem zur Herstellung des Polyurethanprepolymers **B2** verwendeten Polyisocyanat um einen unterschiedlichen Typ Polyisocyanat.

Bevorzugt erfolgt die Herstellung das Polyurethanpolymers **B2** nicht in Anwesenheit des Polyisocyanates **B1.**

Ein besonders bevorzugter Polyurethanklebstoff enthält eine Polyisocyanatkomponente **K2,** umfassend
- mindestens ein Isocyanatgruppen aufweisendes Polyurethanpolymer **B2,** wobei dessen Urethangruppen und freie Isocyanatgruppen bevorzugt abgeleitet sind von 4,4'-Diphenylmethandiisocyanat.

Der Polyurethanklebstoff kann als Bestandteil der Polyolkomponente **K1** zusätzlich weitere mit Isocyanatgruppen reaktionsfähige Substanzen enthalten. Insbesondere kann die Polyolkomponente **K1** mindestens ein Polyol und/oder mindestens einen niedrigmolekularen zwei- oder mehrwertigen Alkohol enthalten, welche zur Herstellung des Polyurethanpolymers **B2** genannt wurden.

Weiterhin kann der Polyurethanklebstoff Katalysatoren enthalten, die die Reaktion von Hydroxylgruppen mit Isocyanatgruppen beschleunigen, insbesondere Zinn-, Zink- und Wismut-organische Metallkatalysatoren, zum Beispiel Dibutylzinndilaurat, oder tertiäre Amine, Amidine oder Guanidine, zum Beispiel 1,4-Diazabicyclo[2.2.2]octan (DABCO) oder 1,8-Diazabicyclo[5.4.0]-undec-7-en (DBU).

Zur Erzielung der Wärmeaktivierung können insbesondere die tertiären Amine, Amidine oder Guanidine mit Phenol oder Carbonsäuren, insbesondere phenolischen oder sonstigen aromatischen Carbonsäuren, reversibel ein Salz bilden, das bei Erhöhung der Temperatur zersetzt wird. Vorzugsweise enthält der Polyurethanklebstoff daher mindestens einen Katalysator ausgewählt aus der Liste bestehend aus tertiären Aminen, Amidinen und Guanidinen, welche als Salz mit Phenol oder Carbonsäuren, vorliegen. Insbesondere handelt es sich um ein Salz, das bei Erhöhung der Temperatur zersetzt wird, insbesondere bei einer Temperatur von 80 - 170 °C.

Weiterhin kann der Polyurethanklebstoff weitere Bestandteile, wie sie der Fachmann aus der Zweikomponenten-Polyurethanchemie her kennt, enthalten. Diese können in nur einer Komponente oder in beiden vorhanden sein. Als derartig zusätzliche Bestandteile können insbesondere Lösungsmittel, Weichmacher und/oder Extender, Füllstoffe wie insbesondere Russe, Kreiden oder Schichtsilikate, weiterhin Pigmente, Rheologiemodifizierer wie insbesondere amorphe Kieselsäuren, Trocknungsmittel wie insbesondere Zeolithe, Haftvermittler wie insbesondere Trialkoxysilane, Stabilisatoren gegen Oxidation, Wärme, Licht- und UV-Strahlung, flammhemmende Substanzen, sowie oberflächenaktive Substanzen, insbesondere Netzmittel, vorhanden sein.

Die Polyolkomponente **K1** und die Polyisocyanatkomponente **K2** werden vorteilhaft derart formuliert, dass ihr Mischungsverhältnis in Volumen im Bereich von 1:3 und 3:1, insbesondere 1:2 und 2:1, liegt. Besonders bevorzugt liegt es im Bereich von 0.8 : 1.2.

Das Mischungsverhältnis zwischen den Komponenten **K1** und **K2** ist vorzugsweise derart, dass im vermischten Polyurethanklebstoff das Verhältnis zwischen der Anzahl Isocyanatgruppen und der Anzahl gegenüber Isocyanaten reaktiven Gruppen, insbesondere die Summe aus OH- und NH₂-Gruppen, vor der Aushärtung im Bereich von 1.3 bis 0.8, 1.2 bis 0.9, 1.2 bis 0.95, 1.2 bis 1, bevorzugt 1.15 bis 1.05, liegt.

Die Herstellung der beiden Komponenten **K1** und **K2** erfolgt getrennt voneinander und, zumindest für die Polyisocyanatkomponente **K2,** unter Ausschluss von Feuchtigkeit. Die Komponenten **K1** und **K2** werden typischerweise jeweils in einem eigenen Gebinde gelagert. Die weiteren Bestandteile des Polyurethanklebstoffs können als Bestandteil der Polyolkomponente **K1** oder der Polyisocyanatkomponente **K2** vorhanden sein, wobei gegenüber Isocyanatgruppen reaktive weitere Bestandteile bevorzugt ein Bestandteil der Polyolkomponente **K1** sind. Ein geeignetes Gebinde zum Lagern der jeweiligen Komponente ist insbesondere ein Fass, ein Hobbock, ein Beutel, ein Eimer, eine Büchse, eine Kartusche oder eine Tube. Die Komponenten **K1** und **K2** sind beide lagerstabil, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Die Polyolkomponente **K1** und die Polyisocyanatkomponente **K2** werden vor der Anwendung des Klebstoffs getrennt voneinander gelagert und erst bei oder unmittelbar vor der Anwendung miteinander vermischt. Sie sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils die Polyolkomponente **K1** beziehungsweise die Polyisocyanatkomponente **K2** des Polyurethanklebstoffs enthält.

Bevorzugte derartige Packungen sind einerseits side-by-side Doppelkartuschen oder Koaxialkartuschen, bei denen zwei röhrenförmige Kammern nebeneinander oder ineinander angeordnet sind und mit Kolben luft- und feuchtigkeitsdicht verschlossen sind. Über den Vortrieb dieser Kolben können die Komponenten aus der Kartusche ausgepresst werden. Die den Kolben entgegengesetzten Seiten der Rohre sind, gegebenenfalls über einen Adapter, derart modifiziert, dass die Kammeröffnungen im Bereich der Öffnung über eine Trennwand miteinander direkt verbunden sind. Vorteilhaft ist im Bereich der Austrittsöffnung der Kammern ein Gewinde angebracht, so dass ein Statikmischer oder ein dynamischer Mischer dicht angebracht werden kann. Derartige Packungen werden insbesondere für Kleinanwendungen bevorzugt, insbesondere für Füllmengen bis 1 Liter.

Für Anwendungen in grösseren Mengen, insbesondere für Anwendungen in der industriellen Fertigung, werden die beiden Komponenten vorteilhaft in Fässer oder Hobbocks abgefüllt und gelagert. Bei der Anwendung werden die Komponenten über Förderpumpen ausgepresst und über Leitungen einer Mischapparatur, wie sie üblicherweise für Zweikomponentenklebstoffe in der industriellen Fertigung verwendet wird, zudosiert.

Das Mischen erfolgt typischerweise über Statikmischer oder mit Hilfe von dynamischen Mischern. Beim Mischen ist darauf zu achten, dass die Polyolkomponente **K1** und die Polyisocyanatkomponente **K2** möglichst homogen vermischt werden. Werden die zwei Komponenten schlecht gemischt, treten lokale Abweichungen vom vorteilhaften Mischungsverhältnis auf, was sich in einer Verschlechterung der mechanischen Eigenschaften auswirken kann. Um die Mischqualität visuell zu kontrollieren kann es vorteilhaft sein, wenn die beiden Komponenten zwei unterschiedliche Farben aufweisen. Eine gute Vermischung liegt dann vor, wenn der vermischte Klebstoff eine homogene Mischfarbe aufweist, ohne sichtbare Streifen oder Schlieren.

Beim Kontakt der Polyolkomponente **K1** mit Isocyanatgruppen der Polyisocyanatkomponente **K2** beginnt die Aushärtung durch chemische Reaktion. Dabei reagieren die Hydroxylgruppen des Diols **A1,** des Triols **A2** und des Polyesterpolyols **A3** und gegebenenfalls vorhandene weitere gegenüber Isocyanatgruppen reaktive Substanzen mit vorhandenen Isocyanatgruppen. Überschüssige Isocyanatgruppen reagieren mit vorhandener Feuchtigkeit. Als Resultat dieser Reaktionen härtet der Polyurethanklebstoff zu einem festen Material aus. Dieser Vorgang wird auch als Vernetzung bezeichnet.

Ein weiterer Gegenstand der Erfindung ist somit auch ein ausgehärteter Polurethanklebstoff, erhalten aus der Aushärtung eines Polyurethanklebstoffs wie im vorliegenden Dokument beschrieben.

Ein weiterer Aspekt der vorliegenden Erfindung betrifft ein Verfahren zum Verkleben von einem ersten Substrat mit einem zweiten Substrat, welches die Schritte umfasst:
- a) Mischen der vorgängig beschriebenen Polyolkomponente **K1** und Polyisocyanatkomponente **K2,**
- b) Applizieren des vermischten Polyurethanklebstoffs auf mindestens eine der zu verklebenden Substratoberflächen,
- c) Fügen der zu verklebenden Substrate innerhalb der Offenzeit,
- d) Erhitzen des Polyurethanklebstoffs auf eine Temperatur von 80 - 170 °C, insbesondere für 30 Sekunden - 5 Minuten,
- e) Aushärten des Polyurethanklebstoffs.

Dabei können die beiden Substrate aus dem gleichen oder unterschiedlichen Materialien bestehen.

In diesem Verfahren zum Verkleben sind geeignete Substrate insbesondere
- Glas, Glaskeramik, Glasmineralfasermatten;
- Metalle und Legierungen, wie Aluminium, Eisen, Stahl und Buntmetalle, sowie oberflächenveredelte Metalle und Legierungen, wie verzinkte oder verchromte Metalle, insbesondere KTL-beschichtete Metalle und Legierungen;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Poly(methylmethacrylat) (PMMA), Polyester, Epoxidharze insbesondere Thermosets auf Epoxybasis, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie kohlefaserverstärkte Kunststoffe (CFK), glasfaserverstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Ziegel, Gips und Natursteine wie Granit, Kalk- und Standstein oder Marmor.

In diesem Verfahren ist eines oder beide Substrate bevorzugt ein Metall oder eine Legierung, insbesondere ein KTL-beschichtetes Metall oder eine KTL-beschichtete Legierung.

Die Substrate können bei Bedarf vor dem Applizieren des Klebstoffs vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Weiter kann es vorteilhaft sein, wenn in dem Schritt d) der Polyurethanklebstoff auf eine Temperatur von 90 - 170 °C erhitzt wird, vorzugsweise auf eine Temperatur von 100 - 160 °C, insbesondere auf eine Temperatur von 120 - 160 °C, besonders bevorzugt auf eine Temperatur von 140 - 160 °C.

Vorzugsweise wird der Polyurethanklebstoff für 30 Sekunden - 5 Minuten, 30 Sekunden - 4 Minuten, 30 Sekunden - 3 Minuten, 40 Sekunden - 2 Minuten, auf die vorgenannte Temperatur erhitzt.

Weiter kann es vorteilhaft sein, wenn in dem Schritt d) nur ein Teil des applizierten Polyurethanklebstoffs, insbesondere 5 - 30 %, vorzugsweise 10 - 20 %, erhitzt. Vorzugsweise wird der Polyurethanklebstoff in Schritt b) in Form einer Klebstoffraupe appliziert und es wird in Schritt d) 5 - 30 %, vorzugsweise 10 - 20 %, der Länge der applizierten Klebstoffraupe in dem Schritt d) erhitzt.

Vorzugsweise weist der in Schritt d) erhitzte Klebstoff unmittelbar, insbesondere 10 -100 Sekunden, vorzugsweise 15 - 30 Sekunden, nach dem Schritt d) eine Zugscherfestigkeit von mehr als 1.5 MPa, mehr als 2.0 MPa, insbesondere mehr als 2.2 MPa, auf. Weiter zeigt der Klebstoff dabei vorzugsweise ein kohäsives Bruchbild.

Das Erhitzen in Schritt d) findet insbesondere mittels Infrarotstrahler, Warmluftföhn, Induktionsheizgerät oder in einem Ofen statt, besonders bevorzugt mittels Infrarotstrahler.

Aus diesem beschriebenen Verfahren zum Verkleben entsteht ein Artikel, bei welchem der Klebstoff zwei Substrate miteinander verbindet.

Dieser Artikel ist insbesondere ein Sandwichelement einer Leichtbaustruktur, ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Schienenfahrzeug oder ein Schiff, sowie ein Flugzeug oder ein Helikopter; oder ein Anbauteil eines solchen Artikels.

Der beschriebene Polyurethanklebstoff weist sehr gute Eigenschaften als struktureller Klebstoff auf.

Als struktureller Klebstoff wird hierbei ein Klebstoff bezeichnet, welcher im ausgehärteten Zustand einen Teil der tragenden Struktur der verklebten Bauteile bildet. Der strukturelle Klebstoff ist somit ein wichtiges Bindeglied der Konstruktion, innerhalb welcher er zwei Bauteile bzw. Substrate verbindet. An seine mechanischen Eigenschaften werden dementsprechend hohe Anforderungen gestellt.

### Beispiele

### verwendete Substanzen:

| | |
|---|---|
| A1, Diol | 1,4-Butandiol von LyondellBasell |
| A2, Triol | EO-endcapped Polyoxypropylentriol, OH-Zahl 35.0 mg KOH/g (Voranol® CP 4755 von Dow) |
| A3, Polyesterpolyol | Bei Raumtemperatur flüssiges Polyesterdiol basierend auf Dimerfettsäuren von C14-C22-Fettsäuren, Dimersäuregehalt von mehr als 95%, mittleres Molekulargewicht ca. 2000 g/mol. |
| A4, aliphatisches Polyol | Bei Raumtemperatur flüssiges hydroxyliertes Rizinusöl, OH-Zahl ca. 120 mg KOH / g, mittlere OH-Funktionalität von ca. 2.2. |
| Polyether-Diol | EO-endcapped Polyoxypropylendiol, OH-Zahl ca. 28 mg KOH/g (Voranol® EP 1900 von Dow) |
| Kat | Säureblockierter Aminkatalysator, tertiäres Amin basierend auf 1,8-Diazabicyclo[5.4.0]undec-7-en (DBU) |
| Russ | |
| Zeolith | Sylosiv® A3 von Grace |

Das **Polymer-1** wurde hergestellt, indem 1300 g Polyoxypropylen-Diol (Acclaim® 4200 N von Bayer; OH-Zahl 28.5 mg KOH/g), 2600 g Polyoxypropylenpolyoxyethylen-Triol (Caradol® MD34-02 von Shell; OH-Zahl 35.0 mg KOH/g), 600 g 4,4'-Methylendiphenyldiisocyanat (Desmodur® 44 MC L von Bayer) und 500 g Diisodecylphthalat nach bekanntem Verfahren bei 80 °C zu einem NCO-terminierten Polyurethanpolymer mit einem Gehalt an freien Isocyanat-Gruppen von 2.1 Gewichts-% umgesetzt wurden.

### Herstellung von Polvurethanklebstoffen

Für jeden Klebstoff wurden die in der Tabelle 1 angegebenen Inhaltsstoffe in den angegebenen Mengen (in Gewichtsteilen) der Polyolkomponente **K1** mittels eines Vakuumdissolvers unter Feuchtigkeitsausschluss zu einer homogenen Paste verarbeitet und aufbewahrt. Ebenso wurden die in der Tabelle 1 angegebenen Inhaltsstoffe der Polyisocyanatkomponente **K2** verarbeitet und aufbewahrt. Anschliessend wurden die beiden Komponenten im angegebenen Mischungsverhältnis **K2/K1** (in Gewichtsteilen, w/w) mittels einem SpeedMixer® (DAC 150 FV, Hauschild) während 30 Sekunden zu einer homogenen Paste verarbeitet und diese unverzüglich folgendermassen geprüft:

Zur Bestimmung der mechanischen Eigenschaften wurde der Klebstoff in Hantelform gemäss ISO 527, Teil 2, 1B, gebracht und während 24 h bei 25°C und anschliessend während 3h bei 80°C gelagert bzw. ausgehärtet.

Nach einer Konditionierungszeit von 24h bei 23 °C wurden das Elastizitätsmodul im Bereich von 0.05 bis 0.25 % Dehnung ("**E-Modul**"**)** die **Zugfestigkeit** und die **Bruchdehnung** der so hergestellten Probekörper gemäss ISO 527 auf einer Zwick Z020 Zugprüfmaschine bei der jeweils in der Tabelle angegebenen Temperatur und einer Prüfgeschwindigkeit von 50 mm/ min gemessen.

Zur Messung der **Zugscherfestigkeit** wurden diverse Prüfkörper hergestellt, wobei der Klebstoff jeweils 1 Minute nach Abschluss der Mischzeit zwischen zwei mit Isopropanol entfetteten KTL-lackierten Stahlblechen in einer Schichtdicke von 2 mm und auf einer überlappenden Klebefläche 15 x 45 mm aufgebracht wurde. An diesen Prüfkörpern wurde die Zugscherfestigkeit nach DIN EN 1465 bestimmt, wobei die Prüfkörper vor der Messung unterschiedlich gelagert waren: entweder, als Mass für die Frühfestigkeit, für 1 h bei 23 °C ("**ZSF 1h RT**") oder für 24 h bei 23 °C ("**ZSF 24h RT"**) und gemessen bei 23 °C; oder, zur Messung der Zugscherfestigkeit im vollständig ausgehärteten Zustand, für 7 Tage bei 23 °C und anschliessend gemessen bei 23°C ("**ZSF 7d RT**"), respektive für 7 Tage bei 23 °C und anschliessend für 3 h bei 80°C und dann gemessen bei 80 °C. (Wärmestandfestigkeit, "**ZSF 7d RT (80°C)").** Zur Messung der Zugscherfestigkeit nach Cataplasmalagerung ("**ZSF 3d Cataplasma**") wurden die Prüfkörper für 3 Tage bei 80 °C und 100 % Luftfeuchtigkeit gelagert, anschliessend für 3 h bei 23°C gelagert und dann gemessen bei 23 °C.

Zur Messung der Zugscherfestigkeit unmittelbar nach der Vorhärtung ("**ZSF Vorhärtung**") wurden diverse Prüfkörper hergestellt, wobei der Klebstoff jeweils 1 Minute nach Abschluss der Mischzeit zwischen zwei mit Isopropanol entfetteten KTL-lackierten Stahlblechen in einer Schichtdicke von 2 mm und auf einer überlappenden Klebefläche 15 x 45 mm aufgebracht wurde. Diese Prüfkörper wurden mittels einer IR-Lampe auf eine Temperatur von 150 °C erhitzt und für 40 Sekunden bei dieser Temperatur gehalten. 15 Sekunden später wurden an den noch heissen Prüfkörpern (keine aktive Abkühlung der Prüfkörper) die Zugscherfestigkeit nach DIN EN 1465 bestimmt.

Die Angaben (af) und (cf) bezeichnen dabei jeweils das Bruchbild, wobei "af" für ein adhäsives Bruchbild, "cf" für ein kohäsives Bruchbild stehen.

Zur Messung der **Topfzeit** wurden ca. 20 g Klebstoff (Komp. K1 und K2) in einen Becher gegeben. Die Uhr wurde gestartet und die beiden Komponenten für ca. 30 Sekunden gründlich mit einem Spatel gemischt. Nach 30 Sekunden wurde die Mischung auf die untere Platte eines Rheometers gegeben. Die Platte war auf 25°C temperiert. Dann wurde die Messung gestartet: Platte / Platte-Rheometer von Anton Paar, Spindeldurchmesser 25 mm, Spalt 0,2 mm, Temperatur 25°C, Scherrate 10 1/s. Die Topfzeit ist die Zeit, die seit Beginn des Mischens vergeht, bis die Mischung eine Viskosität von 500 Pas erreicht.

Zur Messung der **Viskosität** der Komponente K1, respektive K2 ("Viskosität Komponente K1 / K2"), wurden diese wie vorgehend beschrieben mittels eines Rheometers bestimmt.

Zur Bestimmung der Viskosität der Mischung der Komponenten K1 und K2 ("Viskosität Mischung K1 +K2") wurden ca. 20 g Klebstoff (Komp. K1 und K2) in einen Becher gegeben und die beiden Komponenten für ca. 30 Sekunden gründlich mit einem Spatel gemischt. Nach 30 Sekunden wurde die Mischung wie vorgehend beschrieben mittels eines Rheometers gemessen.

Die Resultate sind in der Tabelle 2 angegeben.

Die Angaben **(A1+A2)/(A3+A4), A1/A2** und A3/A4 in der Tabelle 1 beziehen sich auf die Gewichtsverhältnisse der vorhandenen Diole **A1,** Triole **A2,** Polyesterpolyol **A3** und gegebenenfalls aliphatischen Polyolen **A4** im jeweiligen Klebstoff.

Bei **Rf.1** und **Rf.2** handelt es sich um Vergleichsbeispiele, bei **Z-1** und **Z-2** handelt es sich um erfindungsgemässe Beispiele.

**Tabelle 1**

| **Beispiele** | | **Rf.1** | **Z-1** | **Rf.2** | **Z-2** |
|---|---|---|---|---|---|
| Polyolkomponente **K1:** | | | | | |
| | **A1**, 1,4-Butandiol | 10 | 9 | 6 | 8 |
| | **A2,** PolyetherTriol | 24 | 24 | 24 | 24 |
| | Polyether-Diol | 49 | - | - | - |
| | **A3** | - | 49 | - | 29 |
| | **A4** | - | - | 49 | 20 |
| | Zeolith | 4 | 4 | 4 | 4 |
| | Russ | 18 | 16 | 16 | 19 |
| | Kat | 0.7 | 0.7 | 0.7 | 0.7 |
| (**A1**+**A2**)/(**A3+A4**) | | - | 0.67 | 0.61 | 0.65 |
| **A1/A2** | | 0.42 | 0.38 | 0.25 | 0.33 |
| **A3/A4** | | - | - | - | 1.45 |
| | | | | | |
| Polyisocyanatkomponente **K2:** | | | | | |
| | Prepolymer-1 | 85 | 85 | 85 | 85 |
| | Russ | 13 | 13 | 13 | 13 |
| **K2/K1** (w/w) | | 1/1 | 1/1 | 1/1 | 1/1 |

**Tabelle 2, n.b. nicht bestimmt**

| **Beispiele** | **Rf.1** | **Z-1** | **Rf.2** | **Z-2** |
|---|---|---|---|---|
| Viskosität Komponente K1 / K2 [Pas] | 73.6/ 110.5 | 73.6/ 65.3 | 54.6/ 65.3 | 126.6/ 37.4 |
| Topfzeit [min] | 12 | 12,5 | 12,9 | 13,3 |
| Viskosität Mischung K1+K2, [Pas] | 40,1 | 77,3 | 47,5 | 67 |
| ZSF, Vorhärtung [MPa] | 2,4 (AF) | 2,4 (CF) | 1,8 (CF) | 2,1 (CF) |
| ZSF, 1h RT [MPa] | 0,56 CF | 0,32 CF | 0,53 CF | 0,52 CF |
| ZSF, 24 h RT [MPa] | 9,9 CF | 4,0 CF | 8,0 CF | 5,5 CF |
| ZSF, 7d RT [MPa] | 11,5 CF | 8,5 CF | n.b. | 8,1 CF |
| ZSF, 7d RT (80°C) [MPa] | 5,0 CF | 5,3 CF | 3,4 CF | 4,9 CF |
| ZSF, 3d Cataplasma | 10,2 CF | 10,2 CF | 7,7 CF | 9,5 CF |
| E-Modul [MPa] | 40 | 36 | 40 | 40 |
| Zugfestigkeit [MPa] | 11,3 | 11,1 | 10,4 | 14,4 |
| Bruchdehnung [%] | 260 | 230 | 230 | 270 |

Das erfindungsgemässe Beispiel **Z-1** zeigt gegenüber **Rf.1** eine bessere Haftung nach einer IR-Vorhärtung bei 150 °C für 40 Sekunden auf einem KTL-beschichteten Substrat. Anstelle eines adhesiven Bruchverhalten von **Rf.1** wird ein cohäsives Bruchverhalten erhalten.

Weiter zeigt sich im Vergleich von **Z-1** gegenüber **Rf.1** eine Verbesserung der Topfzeit bei sonst vergleichbaren mechanischen Eigenschaften und den Haftungswerten der Endfestigkeit (ZSF 7 d RT) sowie den Haftungswerten nach Cataplasmalagerung.

Die Zugabe von **A4** zu der erfindungsgemässen Zusammensetzung **Z-2** führt gegenüber **Z-1** zu einem schnelleren Haftungsaufbau (ZSF 1 h RT und 24 h RT), einer Verbesserung der Topfzeit sowie zu höheren Werten des E-Modul, Zugfestigkeit und der Bruchdehnung. Weiter wurde überraschenderweise gefunden, dass die Zugabe von **A4** zur Komponente **K1** zu einer Verbesserung deren Lagerstabilität führt. Bei einer Lagerung der Komponente **K1** der **Z-1** in einer Kartusche für 7 Tage bei 40 °C wurde eine leichte Entmischung der Komponente **K1** festgestellt. Bei derselben Lagerung der Komponente **K1** von **Z-2** konnte dagegen keine Entmischung festgestellt werden.

Weiter ist aus dem Vergleichsbeispiel **Rf.2** ersichtlich, dass bei Zusammensetzungen, welche einzig **A4** und kein **A3** enthalten die Haftungswerte nach der IR-Vorhärtung signifikant tiefer sind. Auch sind die Haftungswerte der Cataplasmalagerung und der Wärmestandfestigkeit signifikant schlechter.

## Patentansprüche

1. Polyurethanklebstoff bestehend aus einer Polyolkomponente **K1** und einer Polyisocyanatkomponente **K2;** wobei
die Polyolkomponente **K1**
- mindestens ein Diol **A1** mit zwei primären Hydroxylgruppen und einem Molekulargewicht im Bereich von 60 bis 150 g/mol,
- mindestens ein Triol **A2** mit einem mittleren Molekulargewicht im Bereich von 1'000 bis 10'000 g/mol,
- mindestens ein Polyesterpolyol **A3** basierend auf Dimerfettsäuren und/oder Dimerfettalkoholen, insbesondere basierend auf Dimerfettsäuren; und
die Polyisocyanatkomponente **K2**
- mindestens ein Polyisocyanat **B1** und / oder
- mindestens ein Isocyanatgruppen aufweisendes Polyurethanpolymer **B2** umfasst.

2. Polyurethanklebstoff gemäss Anspruch 1, **dadurch gekennzeichnet, dass** das Triol **A2** ein Polyethertriol ist.

3. Polyurethanklebstoff gemäss einem der vorhergehenden Ansprüche, **dadurch gekennzeichnet, dass** das Triol **A2** ausschliesslich primäre Hydroxylgruppen aufweist.

4. Polyurethanklebstoff gemäss einem der vorhergehenden Ansprüche, **dadurch gekennzeichnet, dass** es sich bei dem mindestens einen Polyesterpolyol **A3** um ein Polyesterpolyol **A3** basierend auf Dimerfettsäuren aus C10 - C30-Fettsäuren, bevorzugter C12 - C25-Fettsäuren, insbesondere C14 - C22-Fettsäuren, handelt.

5. Polyurethanklebstoff gemäss einem der vorhergehenden Ansprüche, **dadurch gekennzeichnet, dass** die Polyolkomponente **K1** zusätzlich mindestens ein aliphatisches Polyol **A4,** welches ein Hydroxylierungsprodukt von einem Triglycerid basierend auf Fettsäuren ist, aufweist.

6. Polyurethanklebstoff gemäss Anspruch 5, **dadurch gekennzeichnet, dass** das aliphatische Polyol **A4** eine mittlere OH-Funktionalität im Bereich von 2 bis 4, vorzugsweise von 2 bis 3, aufweist.

7. Polyurethanklebstoff gemäss Anspruch 5 oder 6, **dadurch gekennzeichnet, dass** es sich bei dem aliphatischen Polyol **A4** um ein Hydroxylierungsprodukt basierend auf Sojaöl oder um ein Hydroxylierungsprodukt basierend auf Ricinusöl, bevorzugt um ein Hydroxylierungsprodukt basierend auf Ricinusöl, handelt.

8. Polyurethanklebstoff gemäss einem der vorhergehenden Ansprüche, **dadurch gekennzeichnet, dass** das Mischungsverhältnis in Volumen zwischen der Polyolkomponente **K1** und der Polyisocyanatkomponente **K2** im Bereich von 1:3 und 3:1, bevorzugt 0.8 : 1.2, liegt.

9. Polyurethanklebstoff gemäss einem der vorhergehenden Ansprüche, **dadurch gekennzeichnet, dass** das Diol **A1,** das Triol **A2,** das Polyesterpolyol **A3** und gegebenfalls das aliphatische Polyol **A4** im Klebstoff in einer solchen Menge vorhanden sind, dass das Gewichtsverhältnis (**A1+A2**)/(**A3+A4**) im Bereich von 0.3 bis 1.3, 0.35 bis 1.1, 0.4 bis 0.9, insbesondere 0.5 bis 0.8, liegt.

10. Polyurethanklebstoff gemäss einem der vorhergehenden Ansprüche, **dadurch gekennzeichnet, dass** das Diol **A1** und das Triol **A2** im Klebstoff in einer solchen Menge vorhanden sind, dass das Gewichtsverhältnis **A1**/**A2** im Bereich von 0.1 bis 0.5, 0.15 bis 0.4, 0.2 bis 0.4, insbesondere 0.25 bis 0.35, liegt.

11. Polyurethanklebstoff gemäss einem der vorhergehenden Ansprüche, **dadurch gekennzeichnet, dass** das Polyesterpolyol **A3** und das gegebenfalls vorhandene aliphatische Polyol **A4** im Klebstoff in einer solchen Menge vorhanden sind, dass das Gewichtsverhältnis **A3/A4** im Bereich von 1.0 bis 3.0, 1.2 bis 2.5, 1.3 bis 2.0, 1.3 bis 1.8, insbesondere 1.35 bis 1.6, liegt.

12. Verfahren zum Verkleben von einem ersten Substrat mit einem zweiten Substrat, umfassend die Schritte
- a) Mischen der Polyolkomponente **K1** und der Polyisocyanatkomponente **K2** eines Polyurethanklebstoffs gemäss einem der Ansprüche 1 bis 11,
- b) Applizieren des vermischten Polyurethanklebstoffs auf mindestens eine der zu verklebenden Substratoberflächen,
- c) Fügen der zu verklebenden Substrate innerhalb der Offenzeit
- d) Erhitzen des Polyurethanklebstoffs auf eine Temperatur von 80 - 170 °C, insbesondere für 30 Sekunden - 5 Minuten,
- e) Aushärten des Polyurethanklebstoffs.

13. Verfahren gemäss Anspruch 12, **dadurch gekennzeichnet, dass** eines oder beide Substrate ein Metall oder eine Legierung, insbesondere ein KTL-beschichtetes Metall oder eine KTL-beschichtete Legierung, ist.

14. Verfahren gemäss Ansprüchen 12 oder 13, **dadurch gekennzeichnet, dass** der Polyurethanklebstoff in Schritt b) in Form einer Klebstoffraupe appliziert wird und in Schritt d) 5 - 30 %, vorzugsweise 10 - 20 %, der Länge der applizierten Klebstoffraupe in dem Schritt d) erhitzt wird.

15. Artikel entstanden aus dem Verfahren zum Verkleben gemäss einem der Ansprüche 12 bis 14.
